# EUROPÄISCHE PATENTSCHRIFT

(11) **EP 0 989 337 B1**
(45) Veröffentlichungstag und Bekanntmachung des Hinweises auf die Patenterteilung: **27.04.2005**
(21) Anmeldenummer: 99116910.3
(22) Anmeldetag: 27.08.1999
(51) Int. Cl.: F16H 59/02

(54) **Entkoppeltes Betätigungselement für eine Sperreinrichtung eines Wählhebels**
Independent latch actuator for locking device of a control lever
Elément d'actionnement indépendant pour verrouillage de levier de manoeuvre

(30) Priorität: 26.09.1998 DE 19844277
(43) Veröffentlichungstag der Anmeldung: 29.03.2000
(73) Patentinhaber: Dr.Ing. h.c.F. Porsche Aktiengesellschaft, 70435 Stuttgart (DE)
(72) Erfinder: Sander, Edmund, 71229 Leonberg (DE); Hartnigk, Sven, 71686 Remseck/N. (DE); Hoebel, Peter, 75242 Neuhausen (DE)

(56) Entgegenhaltungen:
- WO-A-95/13933
- PATENT ABSTRACTS OF JAPAN vol. 1995, no. 02, 31. März 1995 (1995-03-31) -& JP 06 331009 A (TOKAI RIKA CO LTD;OTHERS: 01), 29. November 1994 (1994-11-29)
- PATENT ABSTRACTS OF JAPAN vol. 1996, no. 10, 31. Oktober 1996 (1996-10-31) -& JP 08 159249 A (MITSUBISHI AUTOMOB ENG CO LTD;MITSUBISHI MOTORS CORP), 21. Juni 1996 (1996-06-21)

## Beschreibung

Die Erfindung betrifft ein Betätigungselement für eine Sperreinrichtung eines Wählhebels, wobei das Betätigungselement mit einem Übertragungselement zur Übertragung einer Bewegung des Betätigungselementes auf die Sperreinrichtung verbunden ist.

Ein derartiges Betätigungselement ist beispielsweise aus der WO 95/13933 bekannt geworden, bei der ein als Knopf ausgebildetes Betätigungselement endseits eines als Stange ausgebildeten Übertragungselementes angeordnet ist. Die Bewegung des Knopfes wird von der Stange auf eine Sperreinrichtung übertragen; beim Drücken des Knopfes wird die Sperreinrichtung entriegelt. Um den Knopf in seiner Ruhelage zu halten, ist unterhalb des Knopfes eine am Gehäuse abgestützte Druckfeder vorgesehen. Der Knopf und die Stange sind fest miteinander verbunden, so dass die auf den Knopf aufgebrachte Betätigungskraft vollständig in die Sperreinrichtung eingeleitet wird.

Hierbei stellt sich nun das Problem, dass Sperreinrichtungen für Wählhebel, beispielsweise in Form einer Shiftlock-Sperreinrichtung, gegen missbräuchliche Entriegelung geschützt werden sollen. Andererseits ist die von der Sperreinrichtung noch abzustützende Betätigungskraft meist begrenzt.

Aus der US 4 881425 A ist ein Handbremshebel bekannt, bei dem ein Entsperrknopf bei hohen Sperrkräften relativ zu einer Entriegelungsstange bewegt werden kann, um damit eine versehentliche Entriegelung des Handbrernshebels zu verhindern. Dazu ist innerhalb des Entsperrknopfes des Handbremshebels eine Feder vorgesehen. Zur Aufnahme der Feder weist der Entsperrknopf eine seitliche Ausnehmung auf, in der gleichzeitig ein Kopf der Entriegelungsstange gehalten ist. Gegen die Kraft der Feder ist der Entsperrknopf bewegbar, ohne dass eine Bewegung der Entriegelungsstange erfolgt. Diese Situation tritt dann auf, wenn sich ein Gesperre der Handbremse im verriegelten und nicht entlasteten Zustand befindet. Eine Bewegung der Entriegelungsstange und damit eine Entriegelung des Gesperres ist daher nur möglich, wenn das Gesperre durch Anheben des Wählhebels entlastet ist du die Betätigungskraft an der Entriegelungsstange kleiner als die Kraft der Feder ist. Eine versehentliche Entriegelung der Handbremse ist damit durch eine Kraftbegrenzung im Entsperrknopf verhindert.

Es ist daher Aufgabe der Erfindung, ein einfach zu montierendes Betätigungselement für eine Sperreinrichtung eines Wählhebels zu schaffen, bei der eine missbräuchliche Betätigung verhindert ist.

Diese Aufgabe wird mit den Merkmalen des Patentanspruches 1 gelöst. Erfindungsgemäß wird vorgeschlagen, in dem Betätigungselement eine Vorrichtung zur Begrenzung der Betätigungskraft vorzusehen. In vorteilhafter Weise wird durch diese Anordnung die Betätigungskraft auf einen Wert begrenzt, der von der Sperreinrichtung noch aufgenommen werden kann. Ein Missbrauch ist daher ausgeschlossen. Die Vorrichtung zur Begrenzung der Betätigungskraft ist dabei als vorgespannte Feder ausgeführt. Auf diese Weise kann der Punkt, ab dem eine Bewegung des Betätigungselementes nicht mehr zu einer Bewegung des Übertragungselementes führt, genau eingestellt werden. Sobald die Vorspannkraft der Feder erreicht ist, führt eine Betätigung des Betätigungselementes mit erhöhter Kraft nur noch zu einer Bewegung des Betätigungselementes gegen die vorgespannte Feder. Die vorgespannte Feder ist vorteilhafter Weise in einem innerhalb des Betätigungselementes vorgesehenen einseitig geöffneten Hohlraum angeordnet. Die Öffnung des Hohlraumes ist mit einer Platte abgedeckt, die ihrerseits eine Aufnahme für das Übertragungselement aufweist. Die Platte sorgt dabei für eine sichere Übertragung der Kräfte von der vorgespannten Feder auf das Übertragungselement, während der Hohlraum ein Ausknicken der vorgespannten Feder bei Belastung verhindert.

Vorteilhafte Weiterbildungen der Erfindung sind in dem Unteranspruch beschrieben.

Es wird vorgeschlagen, dass im Bereich der Öffnung des Hohlraumes Rasteinrichtungen vorgesehen sind, die die Platte in ihrer Ruhelage gegen die vorgespannte Feder halten. Die Rasteinrichtungen dienen der Montageerleichterung. Einerseits kann das Betätigungselement wie ein herkömmliches Betätigungselement mit bereits vorgespannter Feder montiert werden, andererseits ist die Montage der Platte gegen die vorgespannte Feder erleichtert, da keine zusätzlichen Befestigungsmittel notwendig sind.

Die Erfindung ist nachstehend anhand des in den Figuren dargestellten Ausführungsbeispieles näher erläutert.

Es zeigen
- Fig. 1: einen Längsschnitt durch einen Wählhebel im unbetätigten Zustand mit einem erfindungsgemäßen Betätigungselement und einem Übertragungselement,
- Fig. 2: das Betätigungselement im betätigten Zustand bei einer normalen Betätigung und
- Fig. 3: das Betätigungselement im betätigten Zustand bei einer missbräuchlichen Betätigung.

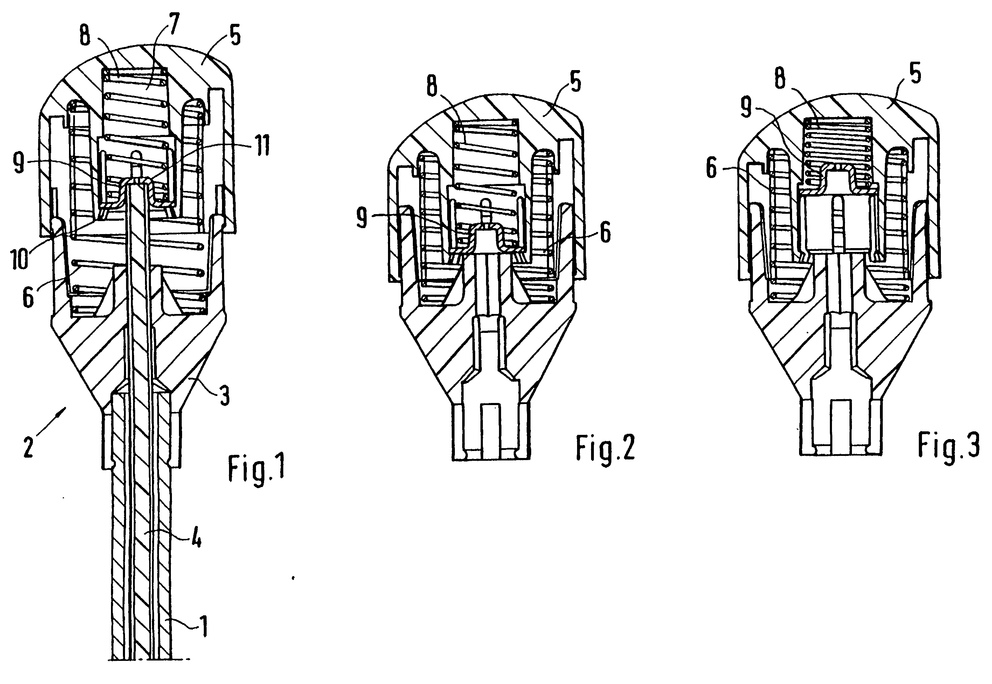

Der in Fig. 1 gezeigte Wählhebel 1 trägt an seiner Oberseite einen Knauf 2. Ein Unterteil 3 des Knaufes 2 ist auf dem Wählhebel durch Aufstecken gehalten. Innerhalb des Wählhebels 1 und das Unterteil 3 durchdringend ist eine als Übertragungselement zu einer nicht dargestellten Sperreinrichtung verwendete Stange 4 vorgesehen; durch Druck auf die Stange 4 wird die Sperreinrichtung entriegelt. Mit dem Unterteil 3 verrastet, jedoch längsbeweglich gehalten, ist ein Oberteil 5 des Knopfes 2, der ein Betätigungselement für die Sperreinrichtung bildet. Zwischen dem Unterteil 3 und dem Oberteil 5 ist eine Feder 6 vorgesehen, die das Oberteil 5 in seiner dargestellten Ruhelage hält.

Innerhalb des Oberteiles 5 ist ein zentraler zylindrischer Hohlraum 7 vorgesehen, der einseitig geöffnet ist und eine zweite Feder 8 auf nimmt. Der Hohlraum 7 ist durch eine Platte 9 abgeschlossen, an der sich die zweite Feder 8 abstützt und die ebenfalls in dem Hohlraum 7 geführt ist. Durch einen umlaufenden Rastvorsprung 10 ist die Platte 9 nach der Montage gehindert, aus der zylindrischen Öffnung 7 unter der Kraft der zweiten Feder 8 herauszutreten. Die zweite Feder 8 ist in der dargestellten Ausgangslage mit einer Kraft von 25 N vorgespannt. An der Platte 9 ist eine Aufnahme 11 zur Aufnahme der Stange 4 vorgesehen.

Übliche Betätigungskräfte für die Sperreinrichtung liegen im Bereich von 2,8 bis 25 N. Wie in Fig. 2 dargestellt, wird bei solchen Betätigungskräften das Oberteil 5 gegen die Kraft der ersten Feder 6 nach unten bewegt. Da die Vorspannkraft der zweiten Feder 8 größer als die Betätigungskraft ist, verbleibt die Platte 9 in ihrer Ruhelage in Bezug auf das Oberteil 5 und die Stange 4 wird somit bewegt.

Wird jedoch, wie in Fig. 3 dargestellt, bei gesperrter Sperreinrichtung und damit blockierter Stange 4 die höchstzulässige Betätigungskraft von 25 N überschritten, so bewegt sich das Oberteil 5 sowohl gegen die Kraft der ersten Feder 6 wie auch gegen die Kraft der zweiten Feder 8. Trotz der Bewegung des Oberteiles 5 wird die Platte 9 und damit die Stange 4 nicht bewegt, da nunmehr die Vorspannkraft der zweiten Feder 8 überschritten ist und die Platte 9 gegen die Kraft der zweiten Feder 8 in den Hohlraum 7 hineinbewegt wird.

Insgesamt ist bei dieser Ausbildung des als Betätigungselement ausgeführten Oberteiles 5 die auf die Stange 4 maximal ausgeübte Betätigungskraft auf die Vorspannkraft der zweiten Feder 8, hier 25 N, beschränkt.

## Patentansprüche

1. Betätigungselement (5) für eine Sperreinrichtung eines Wählhebels (1), wobei das Betätigungselement mit einem Übertragungselement (4) zur Übertragung einer Bewegung des Betätigungselementes auf die Sperreinrichtung verbunden ist, **dadurch gekennzeichnet, dass** in dem Betätigungselement eine Vorrichtung zur Begrenzung der Betätigungskraft vorgesehen ist , welche eine vorgespannte Feder (8), einen einseitig geöffneten Hohlraum (7) zur Aufnahme der vorgespannten Feder und eine den Hohlraum abdeckende Platte (9) aufweist, an welcher sich die vorgespannte Feder abstützt und welche eine Aufnahme (11) für das Übertragungselement (4) aufweist.

2. Betätigungselement nach Anspruch 1, **dadurch gekennzeichnet, dass** im Bereich der Öffnung des Hohlraumes Rasteinrichtungen (10) vorgesehen sind, um die Platte (9) in ihrer Ruhelage bei vorgespannter Feder (8) zu halten.

## Claims

1. An actuating element (5) for a locking device of a selector lever (1), wherein the actuating element is connected to a transmission element (4) for transmitting a movement of the actuating element to the locking device, **characterized in that** a device for limiting the actuating force is provided in the actuating element, the said device comprising a pre-stressed spring (8), a cavity (7) opened on one side for receiving the pre-stressed spring, and a plate (9) which covers the cavity and on which the pre-stressed spring is supported and which has a receiving means (11) for the transmission element (4).

2. An actuating element (5) according to Claim 1, **characterized in that** catch devices (10) are provided in the region of the opening of the cavity in order to hold the plate (9) in its rest position when the spring (8) is pre-stressed.

## Revendications

1. Elément d'actionnement (5) pour un dispositif de blocage d'un levier de sélection (1), l'élément d'actionnement étant relié à un élément de transmission (4) pour la transmission d'un mouvement de l'élément d'actionnement au dispositif de blocage, **caractérisé en ce que** dans l'élément d'actionnement est prévu un dispositif pour limiter la force d'actionnement lequel comporte un ressort (8) précontraint, une cavité (7) ouverte d'un côté destinée à recevoir le ressort précontraint ainsi qu'une plaque recouvrant la cavité sur laquelle prend appui le ressort précontraint et qui présente un logement (11) pour l'élément de transmission (4).

2. Elément d'actionnement selon la revendication 1, **caractérisé en ce que** dans la zone de l'ouverture de la cavité sont prévus des dispositifs d'encliquetage (10) pour maintenir la plaque (9) dans sa position de repos lorsque le ressort (8) est précontraint.
